# EUROPEAN PATENT APPLICATION

(11) **EP 3 181 533 A1**
(43) Date of publication of application: **21.06.2017**
(21) Application number: 15201319.9
(22) Date of filing: 18.12.2015
(51) Int. Cl.: C03C 21/00, C03C 23/00

(54) **GLASS SUBSTRATE FOR CHEMICAL STRENGTHENING AND METHOD FOR CHEMICALLY STRENGTHENING WITH CONTROLLED CURVATURE**

(71) Applicant: AGC Glass Europe, 1348 Louvain-la-Neuve (BE); Asahi Glass Company, Limited, Chiyoda-ku Tokyo 100-8405 (JP)
(72) Inventor: NAVET, Benjamine, 1348 Louvain-La-Neuve (BE); BOULANGER, Pierre, 4218 Couthuin (BE)
(74) Representative: Agustsson, Sveinn Otto

(57) **Abstract**

The invention relates to a glass substrate for chemical strengthening where a side is treated by ion implantation so as to reduce the extent of ion exchange upon chemical strengthening. Other embodiments relate to a method for making a chemically strengthened glass substrate with controlled curvature comprising: providing a substrate having first and second opposing sides, wherein the substrate presents in the surface layer of at least part of the first side a first ion implantation profile that reduces the extent of ion exchange upon chemical strengthening and chemically strengthening the ion implantation treated glass substrate. The parameters of the ion implantation are chosen such that a controlled curvature is obtained upon chemical strengthening.

## Description

The present invention relates to a glass substrate for chemical strengthening, to a method for controlling the curvature of a glass substrate upon chemical strengthening, and a method for producing a chemically strengthened glass substrate with controlled curvature and a chemically strengthened glass substrate.

For many years glass has been the material of choice for building and vehicle windows and also for display covers. Glass offers high chemical and mechanical strength and high transparency. Glass is also compatible with any kind of display technology such as LCD, plasma display, OLED as well as with a large range of touch-screen interface technologies. Glass covers are for example used on television screens, smartphones, mobile phones, tablet computers, electronic books, watches, and computer displays. The more recent trend in display technology goes towards both thinner, lighter and larger devices. A similar trend towards larger and lighter windows is also seen in the transportation industry (i.e. automotive, aeronautical). Therefore it has become necessary to manufacture thinner glass sheets that still offer desirable optical properties as well as the necessary mechanical and chemical resistance.

One well known technology for strengthening glass is chemical strengthening. In chemical strengthening, an alkali-containing glass substrate is immersed in a heated bath containing a molten alkali salt such as for example KNO3 at temperatures well below the glass annealing point. An ion exchange between the host alkali ions of the glass and invading alkali ions from the molten salt occurs. If the invading ions are larger in size than the host ions, then the resultant packing of the invading ions in a near-rigid atomic network of glass leads to the development of a stress profile comprising high surface compression and some balancing interior tensile stress depending on the amount of ions exchanged, the depth of ion exchange and glass sheet thickness. Compared to other glass strengthening processes, chemical strengthening has the advantage that it introduces higher surface compression without optical distortion and it can be applied to thin glass sheets, even below 1mm thickness.

Depending on the process parameters of the chemical strengthening process and on the glass substrate, different extents of ion exchange are obtained. The extent of ion exchange, that is the amount of ions exchanged and the depth of the ion exchange layer in the glass substrate, results in stress profiles having a compressive surface stress (CS) between 300 and 1300 MPa with a depth of the compressive layer (DOL) ranging from a few microns to several hundred microns. The overall level of strengthening is determined by the stress profile across the thickness of the glass substrate. In order to obtain high fracture strength a stress profile with high DOL values and high CS values is necessary. Depending on the intended use of the display device, the chemically strengthened display cover glass is typically required to have a compressive surface stress (CS) higher than 600 MPa with a depth of the compressive layer (DOL) higher than 12 µm.

Many different glass types can be used in chemical strengthening, they usually contain an alkali ion, called host ion, having a relatively small ion radius, such as a lithium or sodium ion, that can be exchanged with another ion, called invading ion, having a relatively larger ion radius such as a potassium, rubidium or cesium ion. The glass substrates are typically used as glass sheets of varying sizes having two major opposing sides.

Some glass substrates have opposing sides with different ion exchange properties, one high ion exchange side and one low ion exchange side. In the high ion exchange side the extent of ion exchange, that is the amount of ions exchanged and/or the depth of the ion exchange layer, is higher after chemical strengthening than on the opposed low ion exchange side. With such substrates it has been observed that when the amount of ions exchanged and/or the depth of ion exchange is different on the two sides of a glass sheet, CS and DOL are different on the two sides and the resulting stress profile across the thickness of the glass sheet is asymmetric. When the stress profile is asymmetric and the CS and DOL of both sides do not outbalance each other this can then cause the normally flat glass substrate to curve or to warp in an uncontrolled way. Indeed in some cases the stress profile across the thickness of a glass sheet is asymmetric but balanced so that no warpage occurs. Particularly when glass substrates are thin, for example less than 1.6 mm thick and when high strengthening levels are required, such as for display covers for example, the level of warpage can become very high. Some of the reasons for this differing ion exchange behavior have been identified. In some cases the amount of the host ion sodium close to the surface may be lower on one side of a glass sheet due to a dealkalization step applied during its production. Another reason may be the presence of tin in the surface layer of one side of the glass sheet due to the float process used for the production of the glass, where the bottom side of the glass comes into contact with a bath of molten tin (tin side of glass) and the top surface does not (air side of glass). The extent of ion exchange in the bottom side of the glass is then lower than on the top side.

One way of avoiding the warpage of the chemically strengthened glass is to limit the level of strengthening. However the glass may not reach the mechanical resistance required for its intended use.

Another way of avoiding warpage is to polish, etch or grind one or both glass sides before the chemical strengthening, thereby removing the surface layer that provokes the differences in the ion exchange properties. This process is however both time consuming and complicated especially for large, thin glass substrates.

Patent application US2014/0305165 describes a method for reducing the warpage caused by chemical strengthening that relies on forming a chemical vapor deposited film containing a specific amount of H atoms on the high ion exchange side which is for example the top side of a glass formed by a float process. The adjustment of H atom content in the film controls the diffusion rate of ions through the film and thus the stress profile obtained through chemical strengthening. Such adjustments of H atom content are necessary not only because the ion exchange properties of the surface layers of glass are different for different glass types, but also because fluctuations occur during production of a single glass type and of course because chemical strengthening process conditions may change. However adjusting the amount of H atoms in a chemical vapor deposited film is far from easy. On one hand the deposition involves complicated physical and chemical reactions that are difficult to predict, on the other hand verifying the amount of H atoms in this film cannot be done easily during the film deposition process itself. Furthermore the film remains permanently on the substrate and will have an impact on its optical properties, its surface properties such as roughness for example and has to be taken into account for all subsequent processes.

### Terminologies

Compressive surface stress (CS): the stress that results from extrusion effect on a glass network by glass surface after ion exchange in the glass, as measured by commercially available surface stress meter FSM from Orihara Industrial Co. Ltd. , based on the optical principle.

Depth of ion exchanged layer (DOL): the thickness of the glass surface layer where ion exchange occurs and compressive stress is produced. DOL can be measured by commercially available surface stress meter FSM from Orihara Industrial Co. Ltd. based on the optical principle.

Central tensile stress (CT): the tensile stress that is generated in the interlayer of glass and counteracts the compressive stress that is generated between the upper and lower surfaces of the glass after ion exchange. The CT can be calculated from the measured CS and DOL values.

Warpage: the warpage of a glass sheet is the deviation from flatness of a curved or warped glass sheet. The level of warpage may be evaluated by measuring the curvature. The warpage direction may be concave or convex relative to a chosen side of the substrate.

### Aim

An aim of the present invention is to provide a glass substrate for chemical strengthening having two major opposing sides, that has been treated by ion implantation on at least part of a side in a way that modifies the extent of ion exchange in the implanted part upon chemical strengthening of the glass substrate.

In particular, an aim of the present invention is to provide a glass substrate for chemical strengthening having two major opposing sides, that has been treated by ion implantation on at least part of a side in a way that modifies the extent of ion exchange upon chemical strengthening in such a way that a controlled curvature is obtained in the implanted part after chemical strengthening of the substrate.

In particular, an aim of the present invention is to provide a glass substrate having a low ion exchange side and a high ion exchange side and where the high ion exchange side has been treated by ion implantation in a way that reduces the extent of ion exchange upon chemical strengthening and that can be chemically strengthened with a low level of warpage or while even remaining substantially flat.

Another aim of the present invention is to provide a process for obtaining a chemically strengthened glass substrate with controlled curvature and bearing no coating.

In particular, an aim of the present invention is to provide a process for chemically strengthening a glass substrate having two major opposing sides with differing ion exchange properties so as to obtain a chemically strengthened glass substrate with low level of warpage and bearing no coating.

Another aim of the present invention is to provide a chemically strengthened glass substrate wherein an ion implantation profile is present in the surface layers of a side.

Another aim of the present invention is to provide a glass substrate having two major opposing sides with different ion exchange properties, that is chemically strengthened, has low warpage or is even substantially flat and bears no coating, and wherein an ion implantation profile is present in the surface layers of a side.

### Description of the invention

The present invention concerns a glass substrate for chemical strengthening having first and second major opposing sides where at least a part of the first side of the substrate is provided with first implanted ions that reduce the extent of ion exchange upon chemical strengthening, and where the first implantation profile of the first implanted ions is such that the part of the first side provided with the first implanted ions shows a first controlled curvature upon chemical strengthening.

The inventors have surprisingly found that the extent of ion exchange in a glass substrate's side may be reduced when it has been submitted to a certain ion implantation treatment before chemically strengthening. The substrate thus presents in the surface layers of the side treated by ion implantation an ion implantation profile that reduces the extent of ion exchange upon chemical strengthening. Thereby they were able to modify and control the extent of ion exchange in a glass side so as to control the level and direction of curvature obtained upon chemically strengthening the glass substrate. That is curvature was controlled, for a given glass substrate and given chemical strengthening conditions, by choosing the appropriate ion implantation profile that results from the chosen ion implantation treatment parameters. On one hand substantially flat chemically strengthened glass substrates could thus be obtained by choosing ion implantation parameters that lead to a balancing of the ion exchange properties of the substrate's opposing sides. On the other hand chemically strengthened glass substrates having an intentional curvature could be obtained by choosing ion implantation parameters that lead to an increase of the difference in ion exchange properties of a glass substrate's opposing sides to a desired degree.

Submitting part of the surface of a glass substrate's side to a certain ion implantation treatment results in the part of this side being provided with implanted ions. The implanted ions are present in this part's surface layer which starts at the surface and descends down to the implantation depth into the substrate.

Submitting the whole of the surface of a glass substrate's side to a certain ion implantation treatment results in the entirety of this side being provided with implanted ions. The implanted ions are present in this sides' entire surface layer which starts at the surface and descends down to the implantation depth into the substrate.

The ion types that may be implanted into these substrate are ions of O, Ar, N, or He respectively. The ions may be single charge ions or a mixture of single charge and multicharge ions. Multicharge ions are ions carrying more than one positive charge. Single charge ions are ions carrying a single positive charge. Single charge ions implanted in the glass substrate may be the single charge ions O⁺ Ar⁺, N⁺ or He⁺. Multicharge ions implanted in the glass substrate are for example O⁺ and O²⁺ or Ar⁺, Ar²⁺, Ar³⁺, Ar⁴⁺ and Ar⁵⁺ or N⁺, N²⁺ and N³⁺ or He⁺ and He²⁺.

In these glass substrates for chemical strengthening the implantation depth of the ions may be comprised between 0.1 µm and 1 µm, preferably between 0.1 µm and 0.5 µm. The ion dosage in the glass substrates according to the present invention is preferably comprised between 10¹² ions/cm² and 10¹⁸ ions/cm², more preferably between 10¹⁵ ions/cm² and 10¹⁸ ions/cm².

Glass substrates suitable for use in connection with the present invention include in particular flat, sheet-like glass substrates, having two major opposing sides and having a glass composition capable of being strengthened by chemical strengthening. The glass substrates suitable for use in connection with the present invention may have differing ion exchange properties on their first and second opposing sides or not.

A particular embodiment of this invention concerns a glass substrate for chemical strengthening having first and second major opposing sides where at least a part of the first side of the substrate is provided with first implanted ions that reduce the extent of ion exchange upon chemical strengthening, and where the first implantation profile of the first implanted ions is such that the part of the first side provided with the first implanted ions shows a first controlled curvature upon chemical strengthening and where additionally to the first implanted ions at least a part of the first side of the substrate is provided with second implanted ions that reduce the extent of ion exchange upon chemical strengthening and where the second implantation profile of the second implanted ions is different from the first implantation profile and where the second implantation profile is such that the part of the first side provided with the second implanted ions shows a second controlled curvature upon chemical strengthening.

A particular embodiment of this invention concerns a glass substrate for chemical strengthening having first and second major opposing sides where at least a part of the first side of the substrate is provided with first implanted ions that reduce the extent of ion exchange upon chemical strengthening, and where the first implantation profile of the first implanted ions is such that the part of the first side provided with the first implanted ions shows a first controlled curvature upon chemical strengthening. Optionally a part of the first side of the substrate is provided with second implanted ions that reduce the extent of ion exchange upon chemical strengthening. The second implantation profile of the optional second implanted ions is different from the first implantation profile and is such that the part of the first side provided with the second implanted ions shows a second controlled curvature upon chemical strengthening. In addition to the first and optional second implanted ions, at least part of the second side of the substrate is provided with third implanted ions that reduce the extent of ion exchange upon chemical strengthening and where the third implantation profile of the third implanted ions is such that the part of the second side provided with the third implanted ions shows a third controlled curvature upon chemical strengthening.

The present invention also concerns a method for making a chemically strengthened glass substrate comprising the following operations:
a) providing a substrate having first and second major opposing sides where at least a part of the first side of the substrate is provided with first implanted ions that reduce the extent of ion exchange upon chemical strengthening,
b) chemically strengthening the coated glass substrate.

Different implanters or ion sources may be used for manufacturing the glass substrates used in the chemical strengthening process of the present invention. These ion sources ionize a gas source to provide positively charged ions of this gas. Depending on the ion source used, the ions that are provided for implanting into a substrate may be single charge ions or they may be a mixture of single charge and multicharge ions. Multicharge ions are ions carrying more than one positive charge. Single charge ions are ions carrying a single positive charge.

In the present invention the gas source is preferably selected among O₂, Ar, N₂ and He. The ion types provided by an ion source are preferably ions of O, Ar, N, or He respectively.

In case a single charge ion source is used, the implanted ions are preferably the single charge ions O⁺ Ar⁺, N⁺ or He⁺.

When the ion source used is a source providing single charge and multi charge ions of O, Ar, N, or He, the implantation beam may comprise various amounts of the different O, Ar, N, or He ions. Example currents of the respective ions are shown in Table 1 below (measured in milli Ampère).

**Table 1**

| **Ions of O** | | **Ions of Ar** | | **Ions of N** | | **Ions of He** | |
|---|---|---|---|---|---|---|---|
| O⁺ | 1.35 mA | Ar⁺ | 2 mA | N⁺ | 0.55 mA | He⁺ | 1.35 mA |
| O²⁺ | 0.15 mA | Ar²⁺ | 1.29 mA | N²⁺ | 0.60 mA | He²⁺ | 0.15 mA |
| | | Ar³⁺ | 0.6 mA | N³⁺ | 0.24 mA | | |
| | | Ar⁴⁺ | 0.22 mA | | | | |
| | | Ar⁵⁺ | 0.11 mA | | | | |

After the creation of the ions, the ion source accelerates these ions so as to form an ion beam.

For a given ion source and ion type, the key ion implantation parameters are the ion acceleration voltage, the beam power, the ion dosage and the ion current.

Curvature upon chemical strengthening is controlled, for a given glass substrate and given chemical strengthening conditions, by choosing the appropriate ion implantation treatment parameters. Depending on the process parameters of the chemical strengthening process and on the glass substrate, different extents of ion exchange are obtained. Ion exchange properties of the surface layers of glass are different for different glass types, fluctuations occur during production of a single glass type and chemical strengthening conditions depend on specification requirements. A single set of implantation parameters that cover all possibilities cannot be given. The required parameters for obtaining a desired controlled curvature are found by varying the ion implantation parameters within the ranges indicated below.

According to the present invention the ions have preferably been implanted using an ion source having a beam power comprised between 1W and 500W, and using an ion acceleration voltage comprised between 5 and 1000 kV. The ion dosage according to the present invention is preferably comprised between 10¹² ions/cm² and 10¹⁸ ions/cm², preferably between 10¹⁵ ions/cm² and 10¹⁸ ions/cm².

The ions of O, Ar, N, or He may be extracted from the ion source with an acceleration voltage comprised between 5 kV and 1000 kV, preferably comprised between 5 kV and 200 kV, more preferably comprised between 10 kV and 100 kV, more preferably between 20 kV and 60 kV, most preferably at about 35 kV.

Such an ion source is for example the Hardion+ RCE ion source from Quertech Ingénierie S.A..

The acceleration voltage and beam power as well as the dosage of ions of ions per surface unit of an area of the glass substrate are preferably chosen to allow the implantation of ions from the beam into an implantation zone or surface layer having a thickness D of between 0.1µ and 1µm, preferably between 0.1µm and 0.5µm, thus reaching significant depths of implantation.

For a fixed acceleration voltage, every differently charged ion will have a different implantation energy proportionally to each ion's charge number n. Thus the implantation energy of the ions may be comprised between n x 5 keV and n x 1000 keV, preferably comprised between n x 5 keV and n x 200 keV, more preferably comprised between n x 10 keV and n x 100 keV, more preferably between n x 20 keV and n x 60 keV, most preferably at about n x 35 keV (keV = kilo-electron-Volt).

For example in an ion implantation beam comprising N⁺, N²⁺, and N³⁺ and an acceleration voltage of 35 kV, N⁺, N²⁺, and N³⁺ ions, having a charge number n of 1, 2 or 3 respectively, will have an implantation energy of 35 keV, 70 keV, and 105 keV respectively. The maximum implantation depth will increase from the least energetic ion (N⁺) to the most energetic ion (N³⁺).

Because of their higher energy ions carrying a higher charge will be implanted deeper into a substrate than ions carrying a lower charge. Therefore, for a given total ion dosage, a narrow depth distribution is obtained when only simple charge ions are implanted and a wider depth distribution is obtained when simple charge and multicharge ions are implanted simultaneously. In this way, certain defects due to high local concentrations of implanted ions are avoided and a large depth of implantation is obtained.

The ion implantation profile is made up of the implanted ion type, the implantation depth and the depth distribution of the implanted ion dosage. The ion implantation profile results from the ion implantation parameters. The most important ion implantation parameters are ion acceleration voltage, the beam power, the ion dosage and the ion current. Depending on the nature of the implanted ions, the ion implantation profile cannot be determined in any direct way.

In a preferred embodiment of the present invention the temperature of the area of the glass substrate being treated, situated under the area being treated is less than or equal to the glass transition temperature of the glass substrate. This temperature is for example influenced by the ion current of the beam, by the residence time of the treated area in the beam and by any cooling means of the substrate. The inventors have surprisingly found that for higher ion currents the reduction of the extent of ion exchange upon chemical strengthening was amplified, although the reason hereof has not been fully understood.

In one embodiment of the invention glass substrate and ion implantation beam are displaced relative to each other so as to progressively treat a certain surface area of the glass substrate. Preferably they are displaced relative to each other at a speed VD comprised between 0.1 mm/s and 1000 m/s. VD is chosen in an appropriate way to control the residence time of the sample in the beam which influences ion dosage and temperature of the area being treated.

In a preferred embodiment of the invention only one type of implanted ions is used. In another embodiment of the invention one or more types of implanted ions are combined.

In one embodiment of the invention several ion implantation beams are used simultaneously or consecutively to treat the glass substrate.

In one embodiment of the invention the total dosage of ions per surface unit of an area of the glass substrate is obtained by a single treatment by an ion implantation beam.

In another embodiment of the invention the total dosage of ions per surface unit of an area of the glass substrate is obtained by several consecutive treatments by one or more ion implantation beams.

The inventors surprisingly found that the extent of ion exchange in a glass substrate upon chemical strengthening could be reduced in a controlled way by introducing a certain dosage of the selected ions to a significant depth in the glass substrate. For a given substrate, a given implanted ion type and given chemical strengthening conditions, the inventors found that the curvature upon chemical strengthening depended essentially on the ion dose and the ion acceleration voltage as well as on the ion current. Thus they were able to obtain a predictable curvature by choosing the ion dose, current and acceleration voltage of the implanted ion.

In a particular embodiment of this invention, a glass substrate for chemical strengthening is provided where additionally to the first ion implantation treatment the substrate is treated on at least part of the first side with a second ion implantation treatment that reduces the extent of ion exchange upon chemical strengthening and that is different from the first ion implantation treatment. The parameters of the second ion implantation treatment is chosen such that a second controlled curvature is obtained upon chemical strengthening in the part of the substrate treated by the second ion implantation treatment on the first side.

The inventors found that when different ion implantation treatments were performed on at least parts of a substrate, different controlled curvatures could be obtained on the different treated parts of the substrate. The first and second ion implantation treatments may differ by ion type, ion dose, current and/or acceleration voltage.

In another particular embodiment of this invention, a glass substrate for chemical strengthening is provided where, additionally to the first or to the first and second ion implantation treatments, the substrate is treated on at least part of the second side with a third ion implantation treatment that reduces the extent of ion exchange upon chemical strengthening where the treatment parameters of the third ion implantation treatment is chosen such that a third controlled curvature is obtained upon chemical strengthening in the part of the substrate treated by the third ion implantation treatment on the second side.

The inventors found that when different ion implantation treatments were performed on at least parts of both opposing substrate sides, more diverse and different controlled curvatures could be obtained on the different treated parts of the substrate. The third ion implantation treatment may differ from the first and/or the second ion implantation treatment by ion type, ion dose, current and/or acceleration voltage or not.

In one particularly preferred embodiment of the present invention, a glass substrate for chemical strengthening is provided having first and second opposing sides
i) where the first and second major opposing sides have differing ion exchange properties in their non-ion implanted state before chemical strengthening, the first being a high ion exchange side and the second being a low ion exchange side,
ii) where at least a part of the first side of the substrate is provided with first implanted ions that reduce the extent of ion exchange upon chemical strengthening
iii) where the implantation profile of the first implanted ions is such that a first controlled curvature comprised between -0.04 x 1/m and 0.04 x 1/m is obtained upon chemical strengthening,

The method for measurement of curvature is explained below. Preferably the substrate is provided with first implanted ions on essentially the entirety of the first side and a controlled curvature comprised between -0.04 x 1/m and 0.04 x 1/m is obtained on the entire substrate upon chemical strengthening. More preferably the substrate is provided with first implanted ions on the entirety of the first side and a controlled curvature comprised between -0.01 x 1/m and 0.01 x 1/m is obtained on the entire substrate upon chemical strengthening.

The inventors found that glass substrates with opposing sides having differing ion exchange properties in their non-ion implanted state could be chemically strengthened with low curvature, even with essentially no curvature when an ion implantation treatment that reduces the extent of ion exchange upon chemical strengthening had been performed on the high ion exchange side.

They found that when the ion implantation treatment had been performed with certain chosen parameters, the ion exchange properties of the high exchange side could be adapted to the ion exchange properties of the opposed low ion exchange side. The chosen ion implantation parameters depend on ion type, the chemical strengthening conditions and the substrate glass.

They also found that the ion exchange properties of a substrate could be unbalanced in a controlled way so as to obtain a desired controlled curvature, by performing an ion implantation treatment with certain chosen parameters on a side of the glass substrate.

The present invention also concerns a method for making a chemically strengthened glass substrate with controlled curvature comprising the following operations:
a) providing a substrate having first and second major opposing sides
   a. where at least a part of the first side of the substrate is provided with first implanted ions that reduce the extent of ion exchange upon chemical strengthening, and
   b. where the first implantation profile of the first implanted ions is such that the part of the first side provided with the first implanted ions shows a first controlled curvature upon chemical strengthening,
b) chemically strengthening the coated glass substrate.

In an embodiment of the present invention, at least a part of the first side of the substrate is provided with second implanted ions that reduce the extent of ion exchange upon chemical strengthening, and where the second implantation profile of the second implanted ions is different from the first implantation profile.

In another embodiment of the present invention, at least part of the first side has been provided with first implanted ions and optionally at least part of the substrate is provided with second implanted ions and furthermore at least part of the second side of the substrate is provided with third implanted ions that reduce extent of ion exchange upon chemical strengthening.

In another embodiment of the present invention the implantation profile of the second implanted ions is such that the part of the first side provided with the second implanted ions shows a second controlled curvature upon chemical strengthening.

In another particular embodiment of the present invention the implantation profile of the third implanted ions is such that the part of the second side provided with the third implanted ions shows a third controlled curvature upon chemical strengthening.

In a particularly preferred embodiment of the present invention, the invention provides a method for chemically strengthening a glass substrate comprising the following operations:
b) providing a substrate having first and second major opposing sides
   i) where the first and second major opposing sides have differing ion exchange properties in their non-ion implanted state, the first being a high ion exchange side and the second being a low ion exchange side,
   ii) where at least a part of the first side of the substrate is provided with first implanted ions that reduce the extent of ion exchange upon chemical strengthening
   iii) where the implantation profile of the first implanted ions is such that a first controlled curvature comprised between -0.04 x 1/m and 0.04 x 1/m is obtained upon chemical strengthening,
c) chemically strengthening the coated glass substrate.

The present invention also concerns an ion implanted, chemically strengthened glass substrate that is substantially flat. Preferably the chemically strengthened glass substrate has on both opposing sides CS values of at least 400 MPa and DOL values of at least 6 µm. CS values are preferably comprised between 400 MPa and 1200 MPa, DOLvalues are preferably comprised between 6 µm and 40 µm. Preferably the chemically strengthened glass substrate has a thickness comprised between 0.1 mm and 3 mm, more preferably between 0.1 mm and 1.6 mm. When the glass substrate is soda lime glass, the two opposing sides' CS values are preferably at least 400 MPa at DOL values of at least 6 µm. When the glass substrates are alumino-silicate glass substrates the CS values are preferably at least 650 MPa and the DOL values at least 15 µm.

Glass substrates suitable for use in connection with the present invention include in particular flat, sheet-like glass substrates, having two major opposing sides and having a glass composition capable of being strengthened by chemical strengthening. The glass substrates suitable for use in connection with the present invention may have differing ion exchange properties on their first and second opposing sides or not.

Specific examples thereof include soda-lime silicate glass, alumino-silicate glass, borate glass, lithium alumine silicate glass, and borosilicate glass, and transparent glass plates formed of various other kinds of glass. Soda-lime glass and alumino-silicate glass is particularly often used.

Among them, glass containing alkali metal ions or alkali earth metal ions, that have smaller ion radius, is preferred, and glass containing Na ions is more preferred. A glass substrate containing Na⁺ ions is capable of being subjected to ion exchange with alkali metal ions having ion radius larger than Na⁺, for example K⁺ ions. The Na⁺ ions can thus be effectively replaced to thereby strengthen the glass, even when the glass substrate has been treated by ion implantation on a side.

The composition of the glass substrate for chemical strengthening according to the present invention is not particularly limited, other than by the fact that it should permit ion exchange. For example, the glass compositions herein below may be used.

The composition of a glass substrate of the invention is not particularly limited and may belong to soda-lime-silicate glass, boro-silicate glass or alumino-silicate glass, or to a still different type of glass insofar as it contains alkali. In particular it may be formed into sheet glass by the float method.

In certain embodiments of the present invention the composition of the glass substrate of the invention is boron- and lithium-free. This means that the elements boron and lithium are not intentionally added in the glass batch/raw materials and that, if present, their content in the composition of the glass sheet reaches only level of an impurity unavoidably included in the production.

In an embodiment, the composition of the glass substrate comprises the following in weight percentage, expressed with respect to the total weight of glass:

| | |
|---|---|
| SiO2 | 40 - 85% |
| Al2O3 | 0 - 30% |
| B2O3 | 0 - 20% |
| Na2O | >0 - 25% |
| CaO | 0 - 20% |
| MgO | 0 - 15% |
| K2O | 0 - 20% |
| BaO | 0 - 20% |

In a preferred embodiment the glass substrate is a soda-lime glass substrate or an alumino-silicate glass substrate.

Advantageously, notably for low production costs reasons, the composition of the glass substrate is a soda-lime-silicate glass. According to this embodiment, the composition of the glass substrate comprises the following in weight percentage, expressed with respect to the total weight of glass :

| | |
|---|---|
| SiO2 | 60 - 78% |
| Al2O3 | 0 - 8% |
| B2O3 | 0 - 4% |
| CaO | 0 - 15% |
| MgO | 0 - 10% |
| Na2O | 5 - 20% |
| K2O | 0 - 10% |
| BaO | 0 - 5%. |

Preferably, the composition of the glass substrate comprises the following in weight percentage, expressed with respect to the total weight of glass :

| | |
|---|---|
| SiO2 | 60 - 78% |
| Al2O3 | 0 - 6% |
| B2O3 | 0 - 1% |
| CaO | 5 - 15% |
| MgO | 0 - 8% |
| Na2O | 10 - 20% |
| K2O | 0 - 5% |
| BaO | 0 - 1%. |

In an embodiment of the current invention the glass substrate is a glass substrate where the first and second opposing sides have differing ion exchange properties upon chemical strengthening in their non-ion implanted state, the first being a high ion exchange side and the second being a low ion exchange side.

In a preferred embodiment the glass substrate is a soda-lime float glass substrate or an alumino-silicate float glass substrate.

The thickness of the glass substrates suitable for use in connection with the present invention is not particularly limited. Generally, the thickness of the glass substrate is preferably 3 mm or less for performing an effective chemical strengthening process which will be described below.

The issue of warpage upon chemical strengthening is important for glass substrates having a thickness comprised between 0.1 mm and 3 mm, particularly having a thickness comprised between 0.1 mm and 1.6 mm, and most important for glass substrates having a thickness comprised between 0.1 mm and 0.7 mm. The issue of warpage upon chemical strengthening becomes also more important when the glass substrates have a low thickness, comprised between 0.1 mm and 1.6 mm, and a high required strengthening level. For soda-lime compositions, the issue of warpage is important for compressive surface stress levels of at least 400 MPa and depth of compressive layer larger than 6 µm, particularly larger than 8 µm. For alumino-silicate compositions, the issue of warpage is particularly important for compressive surface stress levels of at least 650 MPa and depth of compressive layer larger than 15 µm.

One method to assert that the glass substrate has differing ion exchange properties on its opposing sides comprises the following steps: chemically toughen the glass substrate and measure the warpage or determine CS and DOL or analyze and compare the penetration profiles of the invading ion in each side's surface layer.

Preferably the chemical strengthening is performed in a bath of molten salt, preferably comprising KNO₃ at a temperature between 400 and 500 °C for a duration of 20 minutes to 24 hours. CS and DOL can then be determined by the methods described above. The penetration profile of the invading ion in each side's surface layer can be determined by known Secondary Ion Mass spectroscopy (SIMS) or by known X-ray Photoelectron Spectroscopy (XPS) methods. The amounts of invading ion, such as K⁺ for example, can be compared using X-ray fluorescence measurements on the chemically strengthened substrates.

In order to quantify the warpage of a substrate, a 4x4 cm² sample is measured with a DEKTAK 6M Stylus Profiler. The stylus successively plots the linear profile along two orthogonal 3 mm long lines at the sample's center. For each orthogonal line three measurements are made and the curvature is calculated from the average of the six measurements using a parabolic fit and known calculus methods. By convention, when the warpage direction is concave the curvature is given a positive sign, when the warpage direction is convex the curvature is given a negative sign. By convention float glass substrates are measured with the tin side facing the profiler's stylus and as the curvature is the reciprocal of a radius, the unit is 1/m. A glass substrate is considered as having low warpage or low curvature when the curvature is comprised between -0.04 x 1/m and 0.04 x 1/m or the curvature radius is not less than 25 m at the center of the substrate. A glass substrate is considered as substantially flat or as having substantially no curvature when the absolute value of the curvature is not greater than 0.01 x 1/m or the curvature radius is not less than 100 m. A glass substrate is considered as having significant warpage or significant curvature when the absolute value of the curvature is higher than 0.04 x 1/m.

The extent of the reduction of ion exchange properties for a given dosage depends among others on the ion type. For a higher ion exchange reduction at a given ion dose the implanted ions are more preferably chosen among the ions of O, Ar, and N, even more preferably among the ions of O and Ar. For highest ion exchange reduction for a given dosage the implanted ions are most preferably ions of O.

The ion doses suitable for reducing the extent of ion exchange upon chemical strengthening are preferably comprised between 2 x 10¹⁶ ions/cm² and 6 x 10¹⁷ ions/cm².

For reducing the warpage upon chemical strengthening glass, in particular of 0.5 mm to 0.7 mm thickness, in particular soda lime float glass, an ion dose is preferably selected from the following ion dose range for the respective ion types:

| Ion type | range of ion dose |
|---|---|
| O | 4 x 10¹⁶ ions/cm² to 1.2 x 10¹⁷ ions/cm² |
| Ar | 5 x 10¹⁶ ions/cm² to 1.5 x 10¹⁷ ions/cm² |
| N | 6 x 10¹⁶ ions/cm² to 2 x 10¹⁷ ions/cm² |
| He | 1.8 x 10¹⁷ ions/cm² to 6 x 10¹⁷ ions/cm² |

With these parameters chemically strengthened substrates having a curvature comprised between -0.04 1/m and 0.04 1/m can be obtained.

For reducing the warpage upon chemical strengthening glass, in particular of 0.5 mm to 0.7 mm thickness, in particular soda lime float glass, an ion dose is preferably selected from the following ion dose range for the respective ion types:

| Ion type | range of ion dose |
|---|---|
| O | 5 x 10¹⁶ ions/cm² to 7 x 10¹⁶ ions/cm² |
| Ar | 9 x 10¹⁶ ions/cm² to 1.1 x 10¹⁷ ions/cm² |
| N | 1 x 10¹⁷ ions/cm² to 1.5 x 10¹⁷ ions/cm² |
| He | 3.5 x 10¹⁷ ions/cm² to 4.5 x 10¹⁷ ions/cm² |

With these parameters chemically strengthened substrates having a curvature comprised between -0.01 x 1/m and 0.01 x 1/m can be obtained.

The acceleration voltage suitable for reducing the extent of ion exchange upon chemical strengthening are preferably comprised between 15 kV and 35 kV.

Depending of the ion implantation parameters, the glass thickness, and the chemical strengthening conditions, significant curvatures of at least 1 x 1/m, at least 5 x 1/m, and even at least 10 x 1/m can be obtained.

Chemical strengthening processes suitable for the present invention preferably comprises the so-called low temperature type ion exchange using an external source of invading alkali ion relatively large in ion radius compared to the host ion radius. In the ion exchange process the external source of invading alkali ions may be used as a molten salt bath, as sprayed-on salt mixture, as a paste or as a vapor. Examples of the molten salts for performing the ion exchange process include potassium nitrate, and alkali sulfates and alkali chlorides, for example, such as sodium sulfate, potassium sulfate, sodium chloride and potassium chloride. These molten salts may be used either alone or in combination.

The chemical strengthening process may be performed, for example by immersing the glass substrate in bath of molten potassium nitrate at a temperature between 400 and 500° C for 5 minutes to 24 hours. As will be appreciated by those skilled in the art, various process parameters of the ion exchange can be selected by taking into consideration the composition and thickness of the glass, the molten salt used, and the stress profile required for the final use of the chemically strengthened glass.

In another preferred embodiment of the present invention the chemical strengthening is performed by immersing the glass substrate in bath of molten potassium nitrate at a temperature between 400 and 500° C for 24 hours to 48 hours. It was found that these conditions were particularly efficient for obtaining significant curvature levels without breakage of the glass substrates.

Examples of final uses of chemically strengthened glass substrates of the present invention include cover glass of display devices such as digital cameras, cell phones, smartphones, touch pads, PDAs and touch panels, and any display cover.

According to the present invention an ion implantation profile in a glass substrate may thus be used for reducing the extent of ion exchange upon chemical strengthening of the glass substrate.

According to the present invention an ion implantation profile that reduces the extent of ion exchange upon chemical strengthening may thus be used in a glass substrate to control the glass substrate curvature upon chemical strengthening.

In a preferred embodiment of the present invention the ions of the ion implantation profile are selected among the ions of O, Ar, N or He.

In a preferred embodiment of the present invention the ions of the ion implantation profile are single charge ions or a mixture of single charge ions and multicharge ions.

In a preferred embodiment of the present invention the implantation depth of the ion implantation profile is comprised between 0.1 µm and 1 µm, preferably between 0.1 µm and 0.5 µm.

In a preferred embodiment of the present invention the ion dosage of the ion implantation profile is comprised between 10¹² ions/cm² and 10¹⁸ ions/cm², preferably between 10¹⁵ ions/cm² and 10¹⁸ ions/cm².

In a preferred embodiment of the present invention the glass substrate's thickness is comprised between 0.1 mm and 3 mm, preferably between 0.1 mm and 1.3 mm.

In a preferred embodiment of the present invention the glass substrate is a soda-lime glass substrate or an alumino-silicate glass substrate.

### Examples

Comparison example C1 is a 4 x 4 cm² soda lime float glass sample of 0.7 mm thickness that was not treated by ion implantation.

Examples 1 to 6 are 4 x 4 cm² soda lime float glass samples of 0.7 mm thickness that were treated by ion implantation on their air side according to the parameters of table 2.

The ion implantation was performed under vacuum conditions using a Hardion+ RCE ion source.

Chemical strengthening of comparison example C1 and of examples 1 to 6 was performed by placing in a cassette, preheating and then dipping in a molten KNO₃ (>99%) bath for 4 hours at 430°C.

**Table 2**

| Sample Reference | Glass thickness | Implanted ion type | Ion dose | Acceleration voltage | Ion current |
|---|---|---|---|---|---|
| | [mm] | | [ions/cm²] | [kV] | [mA] |
| C1 | 0.7 | | | | |
| 1 | 0.7 | O | 2.5 x 10¹⁶ | 35 | 1 |
| 2 | 0.7 | O | 1 x 10¹⁷ | 35 | 1 |
| 3 | 0.7 | O | 2.5 x 10¹⁶ | 35 | 2 |
| 4 | 0.7 | N | 1 x 10¹⁷ | 35 | 1 |
| 5 | 0.7 | Ar | 1 x 10¹⁷ | 35 | 1 |
| 6 | 0.7 | He | 1 x 10¹⁷ | 35 | 1 |

After chemical strengthening, cooling, and washing, the samples' surface compression stress (CS), depth of layer (DOL) and the curvature were measured as explained above.

The amount of potassium (K⁺) in each side's surface layer of the chemically strengthened substrates was compared by X-ray fluorescence measurements and is given by an arbitrary unit of thousands counts per second (kilo counts per second - [kcps]).

Table 3 summarizes the measurement data for the examples.

**Table 3**

| Sample | Curvature | Air face | | |
|---|---|---|---|---|
| Ref | | CS | DOL | K⁺ |
| | [1/m] | [MPa] | [µm] | [kcps] |
| C1 | 0.076 | 631 | 11.3 | 209.5 |
| 1 | 0.053 | 619 | 11.2 | 202 |
| 2 | - 0.023 | 608 | 10.8 | 176 |
| 3 | - 0.058 | 577 | 9.8 | 165 |
| 4 | 0.046 | 625 | 10.6 | 202 |
| 5 | - 0.001 | 584 | 10.1 | 185 |
| 6 | 0.057 | 642 | 11.2 | 207 |

As can be seen from the table above, when comparing C1 with examples 1 to 3 the ion implantation performed on the air side of the glass substrates reduces the amount of K⁺ that has exchanged with the Na⁺ at the air side of the glass substrate. Depending on the ion implantation parameters, different levels of curvature can be reached. On the tin side of these samples, in average, the CS is 618 MPa, the DOL is 9.3 µm and the K⁺ count is 197 kcps.

When comparing example 1 with example 2 one sees that when the dose of implanted O ions was increased from 2.5 x 10¹⁶ to 1 x 10¹⁷ ions/cm² the extent of ion exchange upon chemical strengthening is reduced on the treated air side of the glass substrate.

The comparison of example 1 with example 3 shows the increasing the ion current from 1 mA to 2 mA reduces the extent of ion exchange upon chemical strengthening.

As can be seen from the curvature measurements, the comparison examples C1 has a significant warpage or significant curvature with curvature levels above 0.04 x 1/m. It has a positive curvature values, meaning that it is concave as seen from the tin side. When comparing C1 with examples 1 and 2 it can be seen that the concave curvature first decreases and then becomes convex as the ion dose increases. This shows that the level of curvature can be controlled over a wide range.

Comparing examples 2, 4, 5, and 6 shows that for a given dose of 1 x 10¹⁷ ions/cm², ion current and acceleration voltage, the level of reduction of the extent of ion exchange increases from He to N to Ar to O ions.

The examples above illustrate that for a given substrate and for given chemical strengthening conditions, by making a few test samples with different implantation parameters, the final curvature can be reasonably predicted within this parameter range.

Before and after chemical strengthening the transmittance (TL) and reflectance (RL, air side) were measured with illuminant D65 and observer angle 10°. The results are shown in table 4 below.

**Table 4**

| Sample Reference | Before chemical strengthening | | After chemical strengthening | |
|---|---|---|---|---|
| | TL | RL (air side) | TL | RL (air side) |
| | [%] | [%] | [%] | [%] |
| C1 | 91.7 | 8.2 | 91.6 | 8.1 |
| 1 | 91.9 | 8.0 | 91.9 | 7.8 |
| 2 | 94.0 | 5.5 | 93.5 | 5.8 |
| 3 | 93.7 | 6.1 | 93.7 | 5.8 |
| 4 | 93.5 | 6.2 | 92.3 | 6.9 |
| 5 | | | 92.9 | 6.8 |
| 6 | | | 90.3 | 8.0 |

The inventors surprisingly found that chemically strengthened samples 1 to 5 show a lower reflectance than sample 6 or the counterexample C1. Thus a combination of controlled curvature upon chemical strengthening and antireflection is obtained with the samples that were implanted with ions of Ar, N or O. Particularly low reflectance was obtained with the samples implanted with ions of O after chemical strengthening. Furthermore the inventors found that soda-lime float glass samples implanted on their air side with O ions at a dosage comprised between 1 x 10¹⁷ and 7.5 x 10¹⁷ ions/cm² at an acceleration voltage comprised between 25 and 35 kV showed the reflectance (RL, air side) reduction of about 1.5% before chemical strengthening.

## Claims

1. Glass substrate for chemical strengthening having first and second major opposing sides where at least a part of the first side of the substrate is provided with first implanted ions that reduce the extent of ion exchange upon chemical strengthening, and where the first implantation profile of the first implanted ions is such that the part of the first side provided with the first implanted ions shows a first controlled curvature upon chemical strengthening.

2. Glass substrate according to claim 1 where at least a part of the first side of the substrate is provided with second implanted ions that reduce the extent of ion exchange upon chemical strengthening and where the second implantation profile of the second implanted ions is different from the first implantation profile and where the second implantation profile is such that the part of the first side provided with the second implanted ions shows a second controlled curvature upon chemical strengthening.

3. Glass substrate according to claim 1 or 2 where at least part of the second side of the substrate is provided with third implanted ions that reduce the extent of ion exchange upon chemical strengthening, and where the third implantation profile of the third implanted ions is such that the part of the second side provided with the third implanted ions shows a third controlled curvature upon chemical strengthening.

4. Glass substrate according to claim 1, where the first and second opposing sides have differing ion exchange properties upon chemical strengthening in their non-ion implanted state, the first being a high ion exchange side and the second being a low ion exchange side and where the first implantation profile is such that a first controlled curvature comprised between -0.04 x 1/m and 0.04 x 1/m is obtained upon chemical strengthening.

5. Glass substrate according to claim 1, where essentially the entirety of the first side of the substrate is provided with the first implanted ions.

6. Glass substrate according to any preceding claim where the first, second and/or third implanted ions are ions of O, Ar, N or He.

7. Glass substrate according to any preceding claim where the first, second and/or third implanted ions are single charge ions or a mixture of single charge ions and multicharge ions.

8. Glass substrate according to any preceding claim where the first, second and/or third implantation profile has a depth comprised between 0.1 µm and 1 µm, preferably between 0.1 µm and 0.5 µm.

9. Glass substrate according to any preceding claim where the first, second and/or third implantation profile has a depth has an ion dosage comprised between 1012 ions/cm² and 1018 ions/cm², preferably between 1015 ions/cm² and 1018 ions/cm².

10. Glass substrate according to any preceding claim where the first, second and/or third implanted ions have been implanted with an implantation energy comprised between n x 5 keV and n x 1000 keV, preferably comprised between n x 5 keV and n x 200 keV, more preferably comprised between n x 10 keV and n x 100 keV, more preferably between n x 20 keV and n x 60 keV, most preferably at about n x 35 keV, where n is each ion's charge number.

11. Glass substrate according to any preceding claim where the glass substrate is chosen among a soda-lime glass substrate and an alumino-silicate glass substrate.

12. Glass substrate according to any preceding claim where the glass substrate's thickness is comprised between 0.1 mm and 3 mm, preferably between 0.1 mm and 1.3 mm.

13. Method for making a chemically strengthened glass substrate comprising the following operations:
a) providing a substrate having first and second major opposing sides where at least a part of the first side of the substrate is provided with first implanted ions that reduce the extent of ion exchange upon chemical strengthening,
b) chemically strengthening the ion implanted glass substrate.

14. Method according to claim 13 wherein at least a part of the first side of the substrate is provided with second implanted ions that reduce the extent of ion exchange upon chemical strengthening, and where the implantation profile of the second implanted ions is different from the first implantation profile.

15. Method according to claims 13 or 14 wherein at least part of the second side of the substrate has been provided with third implanted ions that reduce extent of ion exchange upon chemical strengthening..

16. Method according to claims 13 to 15 wherein the first, second and/or third ion implantation profiles are such that a first, second and/or third controlled curvature is obtained upon chemical strengthening.

17. Method according to claim 13 wherein the substrate's first and second opposing sides have differing ion exchange properties in their non-ion implanted state, the first being a high ion exchange side and the second being a low ion exchange side.

18. Method according to claim 13 or 17 wherein the substrate is provided with first implanted ions on the entirety of the first side.

19. Method according to claim 17 wherein the first ion implantation profile is such that a first controlled curvature comprised between -0.04 x 1/m and 0.04 x 1/m is obtained upon chemical strengthening.

20. Method according to claim 13 wherein the first implanted ions are selected among the ions of O, Ar, N or He.

21. Method according to claim 14 wherein the first and/or second implanted ions are selected among the ions of O, Ar, N or He.

22. Method according to claim 15 wherein the first, second and/or third implanted ions are selected among the ions of O, Ar, N or He.

23. Method according to claims 13 to 22 wherein the first, second and/or third implanted ions are single charge ions or a mixture of single charge ions and multicharge ions.

24. Method according to claims 13 to 23 wherein the implantation depth of the first, second and/or third ion implantation profiles is comprised between 0.1 µm and 1 µm, preferably between 0.1 µm and 0.5 µm.

25. Method according to claims 13 to 24 wherein the ion dosage of the first, second and/or third ion implantation profiles is comprised between 1012 ions/cm² and 1018 ions/cm², preferably between 1015 ions/cm² and 1018 ions/cm².

26. Method according to claims 13 to 25 wherein the glass substrate is chosen among a soda-lime glass substrate and an alumino-silicate glass substrate.

27. Method according to claims 13 to 26 wherein the glass substrate's thickness is comprised between 0.1 mm and 3 mm, preferably between 0.1 and 1.6 mm.

28. Chemically strengthened glass substrate having first and second major opposing sides with differing ion exchange properties in their non-ion implanted state before chemical strengthening, the first being a high ion exchange side and the second being a low ion exchange side, having a thickness comprised between 0.1 mm and 3 mm, having a curvature comprised between -0.04 x 1/m and 0.04 x 1/m and wherein a first ion implantation profile is present on at least part of the first side.

29. Chemically strengthened glass substrate according to claim 28 having a curvature between -0.01 x 1/m and 0.01 x 1/m.

30. Chemically strengthened glass substrate according to claims 28 or 29 having a thickness comprised between 0.1 mm and 1.6 mm, preferably between 0.1 mm and 1.3 mm.

31. Glass substrate according to claims 28 to 30 having on both sides a compressive surface stress comprised between 300 and 1300 MPa and a depth of compressive layer comprised between 6 and 40 µm.

32. Glass substrate according to claims 28 to 31 where the glass substrate is chosen among a soda-lime glass substrate and an alumino-silicate glass substrate.

33. Use of an ion implantation profile in a glass substrate for reducing the extent of ion exchange upon chemical strengthening of the glass substrate.

34. Use of an ion implantation profile that reduces the extent of ion exchange upon chemical strengthening in a glass substrate to control the glass substrate curvature upon chemical strengthening.

35. Use of an ion implantation profile in a glass substrate according to claim 33 or 34 wherein the ions of the ion implantation profile are selected among the ions of O, Ar, N or He.

36. Use of an ion implantation profile in a glass substrate according to claims 33 to 35 wherein the ions of the ion implantation profile are single charge ions or a mixture of single charge ions and multicharge ions.

37. Use of an ion implantation profile in a glass substrate according to claims 33 to 36 wherein the implantation depth of the ion implantation profile is comprised between 0.1 µm and 1 µm, preferably between 0.1 µm and 0.5 µm.

38. Use of an ion implantation profile in a glass substrate according to claim 33 to 37 wherein the ion dosage of the ion implantation profile is comprised between 1012 ions/cm² and 1018 ions/cm², preferably between 1015 ions/cm² and 1018 ions/cm².

39. Use of an ion implantation profile in a glass substrate according to claims 33 to 38 wherein the glass substrate's thickness is comprised between 0.1 mm and 3 mm, preferably between 0.1 mm and 1.3 mm.

40. Use of an ion implantation profile in a glass substrate according to claims 33 to 39 wherein the glass substrate is a soda-lime glass substrate or an alumino-silicate glass substrate.
